# EUROPEAN PATENT SPECIFICATION

(11) **EP 2 388 905 B1**
(45) Date of publication and mention of the grant of the patent: **06.04.2016**
(21) Application number: 10731143.3
(22) Date of filing: 13.01.2010
(51) Int. Cl.: F25B 49/02, H02P 6/18, H02P 6/08, H02P 6/14

(54) **MOTOR DRIVE DEVICE AND ELECTRIC EQUIPMENT UTILIZING SAME**
MOTORANTRIEBSVORRICHTUNG UND ELEKTRISCHE ANLAGE DAMIT
DISPOSITIF DE COMMANDE DE MOTEUR ET APPAREIL ÉLECTRIQUE L'UTILISANT

(30) Priority: 14.01.2009 JP 2009005492
(43) Date of publication of application: 23.11.2011
(73) Proprietor: Panasonic Corporation, Kadoma-shi Osaka 571-8501 (JP)
(72) Inventor: TAKEOKA, Yoshinori, Osaka 540-6207 (JP); TANAKA, Hidehisa, Osaka 540-6207 (JP)
(74) Representative: Eisenführ Speiser
(86) International application number: PCT/JP2010/000122
(87) International publication number: WO 2010/082472

(56) References cited:
- JP-A- 2004 282 911
- JP-A- 2006 101 686
- JP-A- 2008 208 812
- JP-A- 2008 289 310

## Description

### TECHNICAL FIELD

The present invention relates to a motor drive device for driving a brushless DC motor and electric equipment using the same.

### BACKGROUND ART

A conventional motor drive device drives a motor by switching between speed feedback drive and speed open-loop drive according to a current value or drive speed as disclosed in, for example, Patent Literature 1. Fig. 12 shows a conventional motor drive device described in Patent Literature 1.

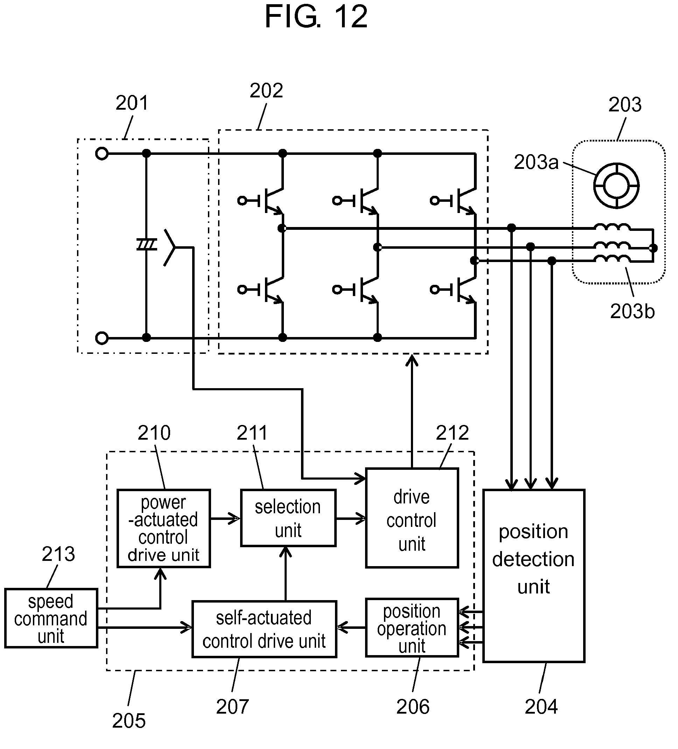

In Fig. 12, DC power supply 201 inputs DC power into inverter 202. Inverter 202 is configured by three-phase bridge connecting six switching elements. Inverter 202 converts the input DC power into AC power having a predetermined frequency, and inputs it into brushless DC motor 203.

Position detection unit 204 obtains information on an induced voltage generated by the rotation of brushless DC motor 203 based on a voltage of an output terminal of inverter 202. Based on the information, position detection unit 204 detects a relative position of rotor 203a of brushless DC motor 203. Control circuit 205 receives an input of a signal output from position detection unit 204, and generates a control signal for a switching element of inverter 202.

Position operation unit 206 operates information on a magnetic pole position of rotor 203a of brushless DC motor 203 based on the signal of position detection unit 204. Self-actuated control drive unit 207 and power-actuated control drive unit 210 output signals each indicating a timing for switching a current to be allowed to flow through three-phase windings of brushless DC motor 203. Such timing signals are signals for driving brushless DC motor 203. Such timing signals output by self-actuated control drive unit 207 drive brushless DC motor 203 by feedback control and are obtained based on the magnetic pole position of rotor 203a obtained from position operation unit 206 and based on speed command unit 213. On the other hand, such timing signals output by power-actuated control drive unit 210 drive brushless DC motor 203 by open-loop control and are obtained based on speed command unit 213. Selection unit 211 selects any one of the signal input from self-actuated control drive unit 207 and the timing signal input from power-actuated control drive unit 210, and outputs the selected signal. In other words, election unit 211 selects between drive of brushless DC motor 203 by self-actuated control drive unit 207 and drive of brushless DC motor 203 by power-actuated control drive unit 210. Drive control unit 212 outputs a control signal for a switching element of inverter 202 based on the signal output from selection unit 211.

The above-mentioned conventional motor drive device switches from self-actuated control drive by feedback control to power-actuated control drive by open-loop control when brushless DC motor 203 is driven at high speed or under high load. Thus, a driving range of brushless DC motor 203 is extended from drive at low speed to drive at high speed, or from drive under low load to drive under high load.

However, in the above-mentioned conventional configuration, in drive at high speed or under high load (hereinafter, referred to as "at high speed / under high load"), brushless DC motor 203 is driven by open-loop control. Therefore, stable drive performance can be obtained when load is small, but a drive state becomes unstable when load is large.

### [Patent Literature]

Japanese Patent Unexamined Publication No. 2003-219681 JP2008289310A provides a motor drive with a brushless DC motor composed of a rotor having a permanent magnet and a stator having three phase winding, an inverter supplying power to three phase winding, a first waveform generating part outputting a rectangular wave whose conduction angle is 120 to 150 degrees or a waveform conforming thereto, a second waveform generating part outputting the rectangular wave whose conduction angle is 130 to 180 degrees or a waveform conforming thereto, and a switching determination part selecting output of the first waveform generating part at a prescribed speed or lower and output of the second waveform generating part at a speed higher than the prescribed speed. When a drive mode transition from the second waveform generating part to the first waveform generating part, the conduction angle is set to be not more than 150 degrees. Thus, stable mode transition is achieved.

### SUMMARY OF THE INVENTION

The present invention solves the above-mentioned conventional problem, and obtains stable drive performance even when a brushless DC motor is driven at high speed / under high load, thereby extending a driving range. Thus, the present invention provides a motor drive device in which an unstable state due to external factors are suppressed and which has high reliability.

A motor drive device of the present invention drives a brushless DC motor including a rotor and a stator having three-phase windings. Furthermore, the present invention includes an inverter for supplying electric power to the three-phase windings; and a terminal voltage obtaining unit for obtaining a terminal voltage of the brushless DC motor. Furthermore, the present invention includes a first waveform generation unit for outputting a first waveform signal that is a waveform having a conduction angle of 120° or more and 150° or less. Furthermore, the present invention includes a frequency setting unit for setting a frequency by changing only the frequency while keeping a duty constant. Furthermore, the present invention includes a second waveform generation unit for outputting a second waveform signal that is a waveform having a predetermined relation with respect to the terminal voltage obtained by the terminal voltage obtaining unit, the frequency set by the frequency setting unit, and a conduction angle of 120° or more and less than 180°. Furthermore, the present invention includes a switching determination unit for switching output so that the first waveform signal is output when the speed of the rotor is determined to be lower than a predetermined speed, and the second waveform signal is output when the speed of the rotor is determined to be higher than the predetermined speed. Furthermore, the present invention includes the drive unit for outputting a drive signal to the inverter, indicating a supplying timing of electric power to be supplied to the three-phase windings by the inverter, to the inverter based on the first or second waveform signal output from the switching determination unit.

The motor drive device further comprises a frequency limiting unit receiving an input of the frequency set by the frequency setting unit, and for outputting the input frequency when the frequency is equal to or below an upper limit frequency and outputting the upper limit frequency when the frequency is above the upper limit frequency. The motor drive device further comprises an upper limit frequency setting unit for setting the upper limit frequency based on a maximum frequency of the first waveform signal, and outputting the upper limit frequency to the frequency limiting unit. The motor drive device further comprises an upper limit frequency changing unit for resetting the upper limit frequency by temporally switching from drive by the second waveform signal to drive by the first waveform signal when a predetermined time has passed after the start of drive by the second waveform signal.

With such a configuration, the brushless DC motor is driven based on the first waveform signal that is a waveform having a conduction angle of 120° or more and 150° or less when the speed is low. On the other hand, the brushless DC motor is driven based on the second waveform signal that is a waveform having a conduction angle of 120° or more and less than 180° according to the position of the rotor and the set frequency when the speed is high.

Therefore, in the motor drive device of the present invention, even in drive at high speed / under high load, the drive is stable and a driving range is extended. Thus, it is possible to provide a motor drive device in which an unstable state due to external factors are suppressed and which has high reliability.

### BRIEF DESCRIPTION OF DRAWINGS

Fig. 1 is a block diagram showing a motor drive device in accordance with a first exemplary embodiment of the present invention.
Fig. 2 is a timing chart of the motor drive device in the exemplary embodiment.
Fig. 3 is a graph illustrating an optimum conduction angle of the motor drive device in the exemplary embodiment.
Fig. 4 is another timing chart of the motor drive device in the exemplary embodiment.
Fig. 5 is a graph showing a relation between toque and a phase when a brushless DC motor is driven synchronously in the exemplary embodiment.
Fig. 6 is a graph illustrating a phase relation between a phase current and a terminal voltage of the brushless DC motor in the exemplary embodiment.
Fig. 7A is a graph illustrating a phase relation of the brushless DC motor in the exemplary embodiment.
Fig. 7B is a graph illustrating another phase relation of the brushless DC motor in the exemplary embodiment.
Fig. 8 is a flowchart showing an operation of a second waveform generation unit of the motor drive device.
Fig. 9 is a graph showing a relation between a rotation rate and a duty of the brushless DC motor in the exemplary embodiment.
Fig. 10 is a timing chart of a rotation rate and a duty of the motor drive device in the exemplary embodiment.
Fig. 11 is a sectional view showing a principal part of the brushless DC motor in the exemplary embodiment.
Fig. 12 is a block diagram showing a conventional motor drive device.

### DETAILED DESCRIPTION OF PREFERRED EMBODIMENTS

Hereinafter, an exemplary embodiment of the present invention is described with reference to drawings.

### FIRST EXEMPLARY EMBODIMENT

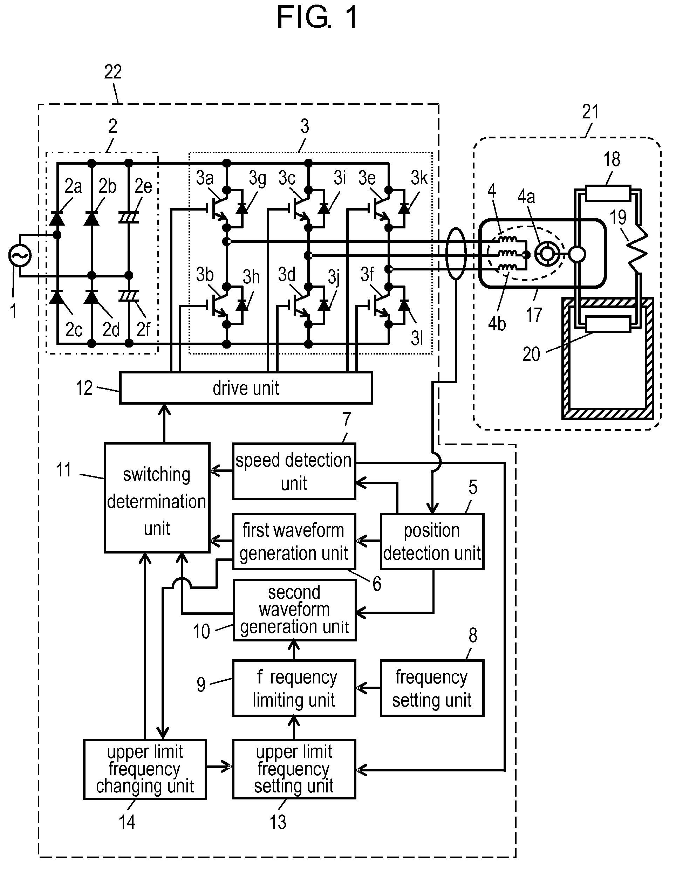

Fig. 1 is a block diagram showing a motor drive device in accordance with a first exemplary embodiment of the present invention. In Fig. 1, AC power supply 1 is a general commercial power supply. In Japan, it is a 50 Hz or 60 Hz power supply having an effective value of 100 V. Motor drive device 22 is connected to AC power supply 1 and drives brushless DC motor 4. Hereinafter, motor drive device 22 is described.

Rectifying and smoothing circuit 2 receives an input from AC power supply 1 and rectifies and smoothes AC electric power to DC electric power. Rectifying and smoothing circuit 2 includes four bridge-connected rectifier diodes 2a to 2d, and smoothing capacitors 2e and 2f. In this exemplary embodiment, rectifying and smoothing circuit 2 is made of a voltage doubler rectifying circuit, but rectifying and smoothing circuit 2 may be made of a full-wave rectifying circuit. Furthermore, in this exemplary embodiment, AC power supply 1 is a single-phase AC power supply. However, when AC power supply 1 is a three-phase AC power supply, rectifying and smoothing circuit 2 is made of a three-phase rectifying and smoothing circuit.

Inverter 3 converts DC power from rectifying and smoothing circuit 2 into AC power. Inverter 3 includes six switching elements 3a to 3f which are connected via a three-phase bridge. Furthermore, six return current diodes 3g to 31 are connected in the direction opposite to switching elements 3a to 3f, respectively.

Brushless DC motor 4 includes rotor 4a having a permanent magnet, and stator 4b having three-phase windings. In brushless DC motor 4, a three-phase AC current generated by inverter 3 flows through the three-phase windings of stator 4b so as to rotate rotor 4a.

In this exemplary embodiment, position detection unit 5 obtains a terminal voltage of brushless DC motor 4. That is to say, position detection unit 5 detects a relative magnetic pole position of rotor 4a of brushless DC motor 4. Specifically, position detection unit 5 detects a relative rotation position of rotor 4a based on an induced voltage generated in the three-phase windings of stator 4b. Another method for detecting a position includes a method of performing a vector operation of the detection results of a motor current (phase current or bus-line current) so as to estimate a magnetic pole position.

Furthermore, position detection unit 5 detects a current zero cross of a phase current of brushless DC motor 4 by obtaining, for example, a terminal voltage of inverter 3. Specifically, position detection unit 5 detects the presence or absence of a current flowing through a return current diode (for example, diode 3h) of inverter 3, that is, a point at which the flowing of current is changed from positive to negative, or from negative to positive, that is, a zero-crossing point. Position detection unit 5 detects this zero-crossing point as a zero-crossing point of the phase current of brushless DC motor 4. Thus, position detection unit 5 detects the magnetic pole position and the zero-crossing point of the phase current of brushless DC motor 4.

First waveform generation unit 6 generates a first waveform signal for driving switching elements 3a to 3f of inverter 3. The first waveform signal is a rectangular wave signal having a conduction angle of 120° or more and 150° or less. In order to smoothly drive brushless DC motor 4 having three-phase windings, the conduction angle needs to be 120° or more. On the other hand, in order for position detection unit 5 to detect a position based on the induced voltage, an on/off interval of the switching element needs to be an interval of 30° or more. Therefore, the upper limit of the conduction angle is 150°, a value obtained by subtracting 30° from 180°. Note here that the first waveform signal may be other than the rectangular wave, and may include a waveform similar to the rectangular wave. Examples include a trapezoid wave provided with an inclination in rise/fall of a waveform.

First waveform generation unit 6 generates the first waveform signal based on the position information on rotor 4a detected by position detection unit 5. First waveform generation unit 6 carries out pulse width modulation (PWM) duty control in order to keep the rotation rate constant. Thus, brushless DC motor 4 is driven efficiently in an optimum duty based on the rotation position.

Frequency setting unit 8 sets a frequency by changing only the frequency while keeping a duty constant. When the frequency input from frequency setting unit 8 is not beyond the upper limit frequency, frequency limiting unit 9 outputs the input frequency to second waveform generation unit 10. On the contrary, when the frequency input from frequency setting unit 8 is beyond the upper limit frequency, frequency limiting unit 9 outputs the upper limit frequency to second waveform generation unit 10.

Second waveform generation unit 10 generates a second waveform signal for driving switching elements 3a to 3f of inverter 3 based on the frequency from frequency limiting unit 9 and the position information from position detection unit 5. The second waveform signal is a rectangular wave signal having a conduction angle of 120° or more and less than 180°. Similar to first waveform generation unit 6, since brushless DC motor 4 has three-phase windings, the conduction angle needs to be 120° or more. On the other hand, in second waveform generation unit 10, the on/off interval of the switching element is not necessary, and therefore, the upper limit is made to be less than 180°. By considering the fact that position detection unit 5 detects a zero cross, an off period is appropriately provided. For example, the off period of 5° of a conduction angle may be provided after the zero cross is detected. Note here that the second waveform signal may be any waveform as long as it is similar to a rectangular wave. For example, it may be a sine wave or a distortion wave. Furthermore, in this exemplary embodiment, the duty is the maximum or a state near to the maximum (duty is constant and is 90 to 100%).

Speed detection unit 7 detects the speed of brushless DC motor 4 (that is, rotation speed) based on the position information detected by position detection unit 5. For example, the speed can be easily detected by measuring a signal from position detection unit 5 generated in a constant cycle.

Switching determination unit 11 determines whether the rotation speed of rotor 4a is low or high, and switches a waveform signal to be input into drive unit 12 between the first waveform signal or the second waveform signal. Specifically, when the speed is low, switching determination unit 11 selects the first waveform signal, and when the speed is high, switching determination unit 11 selects the second waveform signal. Herein, determination of whether the rotation speed is low or high can be carried out based on the actual speed detected by speed detection unit 7. Besides, determination of whether the rotation speed is low or high can be carried out based on the set rotation rate or duty. For example, when the duty is the maximum (generally, 100%), since the speed is the maximum, switching determination unit 11 switches the waveform signal to the second waveform signal.

Drive unit 12 outputs a drive signal indicating a supplying timing of electric power to be supplied by inverter 3 to the three-phase windings of brushless DC motor 4 based on the waveform signal output from switching determination unit 11. Specifically, the drive signal turns switching elements 3a to 3f of inverter 3 on or off (hereinafter, which is referred to as "on/off"). Thus, an optimum AC power is applied to stator 4b, rotor 4a is rotated, and brushless DC motor 4 is driven.

Upper limit frequency setting unit 13 sets an upper limit frequency corresponding to the maximum rotation rate (that is, the rotation rate when the duty is 100%) when brushless DC motor 4 is driven based on the first waveform signal. That is to say, the upper limit rotation rate is set based on the maximum rotation rate, and the upper limit frequency corresponding to this upper limit rotation rate is set. In this exemplary embodiment, the upper limit frequency (that is, the upper limit rotation rate of brushless DC motor 4) is set corresponding to 1.5 times as the above-mentioned maximum rotation rate. For example, when the maximum rotation rate is 50 r/s, the upper limit rotation rate is set to 75 r/s. Upper limit frequency setting unit 13 sets a frequency corresponding to this upper limit rotation rate, 75 r/s, as the upper limit frequency. Note here that this upper limit frequency is used for limiting a frequency of frequency limiting unit 9.

This upper limit frequency is set as follows. When brushless DC motor 4 is driven by frequency setting unit 8 and second waveform generation unit 10, brushless DC motor 4 is driven as a synchronous motor in which rotor 4a follows the commutation of inverter 3. Therefore, rotor 4a is delayed with respect to the commutation, resulting in a state in which the phase of the induced voltage is delayed with respect to the phase of the phase current. That is to say, with reference to the phase of the induced voltage, brushless DC motor 4 is driven in a state in which the phase of the phase current of the motor leads with respect to the phase of the induced voltage (that is, a magnetic flux weakening state). Therefore, further higher rotation is possible as compared with the drive by first waveform generation unit 6 in which the duty is 100%. However, when the leading angle is larger (that is, rotor 4a is largely delayed with respect to the commutation), the motor becomes out of synchronization, rotor 4a loses synchronization. Therefore, the setting is carried out so that the upper limit frequency is lower than that of the rotation rate that causes the loss of synchronization, thereby improving the reliability of motor drive device 22.

Upper limit frequency changing unit 14 firstly detects that drive by second waveform generation unit 10 has been carried out for a predetermined time (for example, 30 min). Next, upper limit frequency changing unit 14 indicates to switching determination unit 11 to compulsorily switch the drive of brushless DC motor 4 from the drive by second waveform generation unit 10 to the drive by first waveform generation unit 6. Furthermore, upper limit frequency changing unit 14 resets the upper limit frequency of upper limit frequency setting unit 13.

Note here that position detection unit 5 detects a position of rotor 4a, for example, by obtaining a terminal voltage of inverter 3. Specifically, position detection unit 5 detects the presence or absence of a current flowing through the return current diode (for example diode 3h) of inverter 3, that is, a point at which the flowing of a current is switched from positive to negative or from negative to positive (that is, a zero-crossing point) as the position of rotor 4a. Furthermore, the output of position detection unit 5 corresponds to an output of a signal indicating whether the terminal voltage of inverter 3 is higher or lower with respect to the threshold. Therefore, the output of position detection unit 5 can be used as a zero-crossing point of the induced voltage of brushless DC motor 4 which first waveform generation unit 6 is based on.

Next, electric equipment using motor drive device 22 of this exemplary embodiment is described. As an example of such electric equipment, refrigerator 21 is described.

In refrigerator 21, compressor 17 is installed. The rotational motion of rotor 4a of brushless DC motor 4 is converted into a reciprocating motion by a crank shaft (not shown). A piston (not shown) connected to the crank shaft carries out a reciprocating motion in a cylinder (not shown) so as to compress a refrigerant in the cylinder. That is to say, brushless DC motor 4, the crank shaft, the piston, and the cylinder constitute compressor 17.

For a compression method (mechanism method) of compressor 17, any methods such as a rotary type and a scroll type may be used. In this exemplary embodiment, the case of a recipro type (reciprocating type) is described. Compressor 17 of the recipro type has large inertia. Therefore, when brushless DC motor 4 of compressor 17 is driven synchronously, the drive of compressor 17 is stable.

The refrigerant used for compressor 17 is generally R134a, and the like. In this exemplary embodiment, however, R600a is used as a refrigerant. R600a has smaller global warming potential but a lower refrigeration capacity as compared with R134a. In this exemplary embodiment, compressor 17 is configured by a recipro type compressor and has a large cylinder volume in order to secure the refrigeration capacity. Since compressor 17 having a large cylinder volume has large inertia, even if a power supply voltage is reduced, brushless DC motor 4 is rotated by inertia. Thus, change of the rotation speed is reduced, so that more stable synchronous drive can be achieved. However, since compressor 17 having a large cylinder volume has a large load, it cannot be driven by a conventional motor drive device. Motor drive device 22 of this exemplary embodiment is suitable for driving compressor 17 using R600a because a driving range particularly under high load is extended.

The refrigerant compressed by compressor 17 constitutes a refrigerating cycle passing through condensation device 18, decompressor 19, and evaporator 20, sequentially, and then returning to compressor 17. At this time, since heat is released in condensation device 18, and heat is absorbed in evaporator 20, cooling and heating can be carried out. Refrigerator 21 is configured by installing this refrigerating cycle. Herein, as another example of electric equipment, equipment in which condensation device 18 or evaporator 20 is provided with an air blower is an air conditioner.

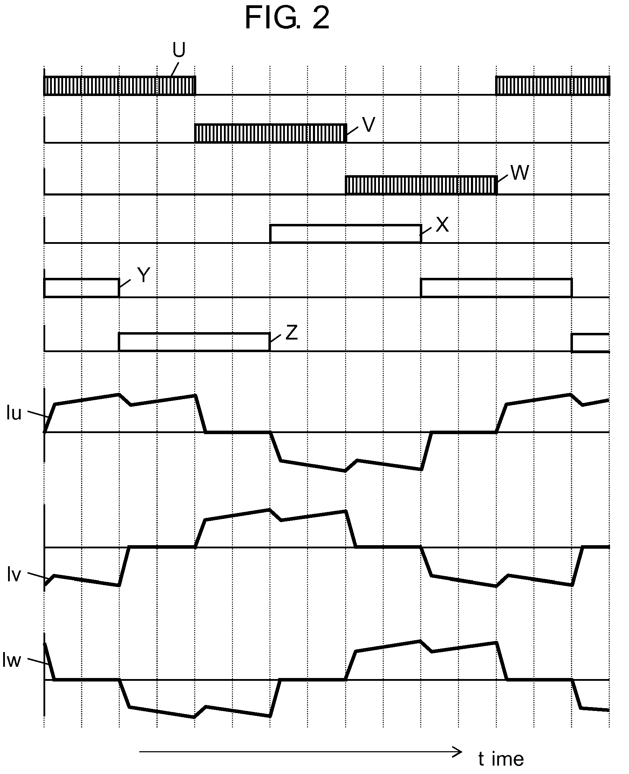

An operation of motor drive device 22 configured as mentioned above is described. Firstly, an operation when the speed of brushless DC motor 4 is low (at low speed) is described. Fig. 2 is a timing chart of motor drive device 22 in the exemplary embodiment. In particular, Fig. 2 is a timing chart of a signal for driving inverter 3 at low speed. The signal for driving inverter 3 is a drive signal output from drive unit 12 in order to turn on/off switching elements 3a to 3f of inverter 3. In this case, this drive signal is obtained based on the first waveform signal. The first waveform signal is output from first waveform generation unit 6 based on the output of position detection unit 5.

In Fig. 2, signals U, V, W, X, Y, and Z are drive signals for turning on/off switching elements 3a, 3c, 3e, 3b, 3d, and 3f, respectively. Waveforms Iu, Iv, and Iw are waveforms of currents of U phase, V phase, and W phase of the windings of stator 4b, respectively. Herein, in drive at low speed, based on a signal of position detection unit 5, commutation is carried out sequentially in the interval of every 120°. Signals U, V, and W are controlled by duty control by PWM control. Furthermore, waveforms Iu, Iv, and Iw that are waveforms of currents of U phase, V phase, and W phase are saw tooth waveforms as shown in Fig. 2. In this case, based on the output of position detection unit 5, the communication is carried out at an optimum timing. Therefore, brushless DC motor 4 is driven most efficiently.

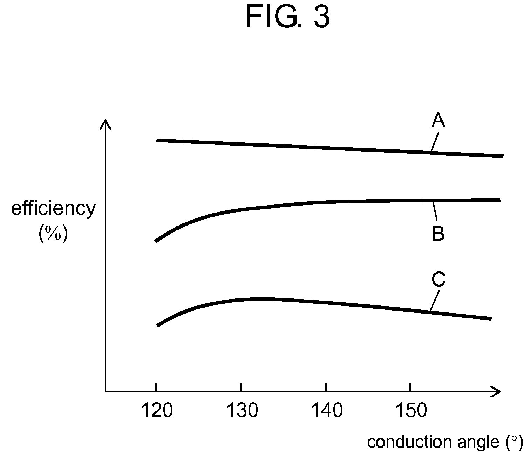

Next, an optimum conduction angle is described with reference to Fig. 3. Fig. 3 is a graph illustrating an optimum conduction angle of motor drive device 22 in this exemplary embodiment. In particular, Fig. 3 shows a relation between a conduction angle and efficiency at low speed. In Fig. 3, line A denotes circuit efficiency, line B denotes motor efficiency, and line C denotes overall efficiency (the product of circuit efficiency A and motor efficiency B). As shown in Fig. 3, when the conduction angle is made to be larger than 120°, motor efficiency B is improved. This is because when the conduction angle is widened, the effective value of the phase current of the motor is reduced (that is, the power factor is increased), the copper loss of the motor is reduced and accordingly motor efficiency B is increased. However, when the conduction angle is made to be larger than 120°, the number of switching is increased, so that switching loss may be increased. In such a case, circuit efficiency A is reduced. From the relation between circuit efficiency A and motor efficiency B, a conduction angle capable of obtaining the best overall efficiency C is present. In this exemplary embodiment, a conduction angle at which overall efficiency C is made to be the best is 130°.

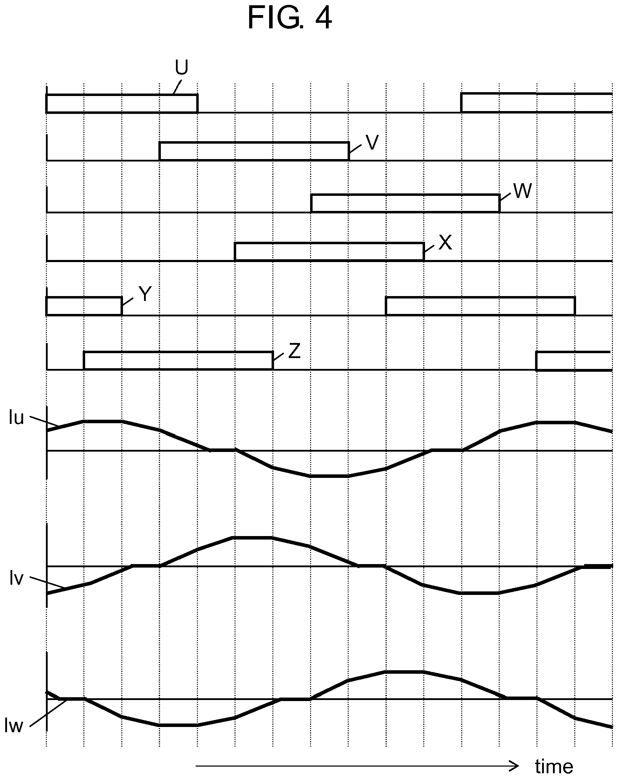

Next, an operation when the speed of brushless DC motor 4 is high (at high speed) is described. Fig. 4 is a timing chart of motor drive device 22 in the exemplary embodiment. In particular, Fig. 4 is a timing chart of a drive signal for driving inverter 3 at high speed. In this case, this drive signal is obtained based on the second waveform signal. The second waveform signal is output from second waveform generation unit 10 based on the output of frequency setting unit 8.

Signals U, V, W, X, Y, and Z, as well as waveforms Iu, Iv, and Iw of Fig. 4 are the same as those in Fig. 2. Signals U, V, W, X, Y, and Z output a predetermined frequency based on the output of frequency setting unit 8 and carries out commutation. The conduction angle of this case is 120° or more and less than 180°. Fig. 4 shows a case in which the conduction angle is 150°. By increasing the conduction angle, waveforms Iu, Iv, and Iw of the electric currents of the phases approach a quasi-sine wave.

By increasing the frequency with a duty constant, rotation speed is remarkably increased as compared with a conventional one. In this state in which the rotation speed is increased, a motor is driven as a synchronous motor, and an electric current is increased according to the increase in the drive frequency. In this case, by widening the conduction angle to less than 180° that is a maximum angle, a peak current is suppressed. Therefore, even if brushless DC motor 4 is driven with a higher electric current, it is operated without being provided with overcurrent protection.

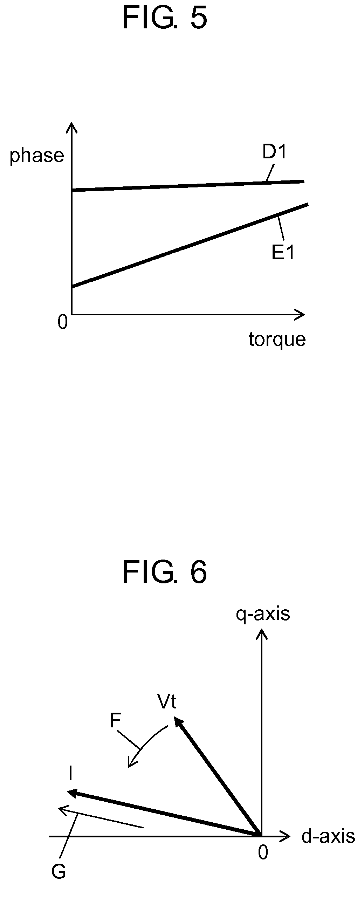

Herein, the second waveform signal generated by second waveform generation unit 10 is described. Fig. 5 is a graph showing a relation between toque and a phase when brushless DC motor 4 is driven synchronously. In Fig. 5, the abscissa shows torque of the motor, and the ordinate shows a phase difference with respect to a phase of an induced voltage, showing that when the phase is positive, the phase of the phase current leads with respect to the phase of the induced voltage. Furthermore, in Fig. 5 showing a stable state of synchronous drive, line D1 shows the phase of the phase current of brushless DC motor 4, and line E1 shows the phase of the terminal voltage of brushless DC motor 4. Herein, since the phase of the phase current leads with respect to the phase of the terminal voltage, it is revealed that brushless DC motor 4 is driven synchronously at high speed. As is apparent from the relation between the phase of the phase current and the phase of the terminal voltage shown in Fig. 5, the change of the phase of the phase current with respect to the load torque is small. On the other hand, since the phase of the terminal voltage changes linearly, the phase difference between the phase current and the terminal voltage changes substantially linearly according to the load torque.

In this way, in synchronous drive, the drive of brushless DC motor 4 is stable in an appropriate relation with respect to the phase of the phase current and the phase of the terminal voltage according to the drive speed and load. In this case, the relation between the phase of the terminal voltage and the phase of the phase current is shown in Fig. 6. In particular, Fig. 6 is a vector diagram showing the relation between the phase of the phase current and the phase of the terminal voltage according to the load on the d-q plane.

In the synchronous drive, when the load is increased, terminal voltage vector Vt keeps the size substantially constant while the phase shifts in the leading direction. With reference to Fig. 6, terminal voltage vector Vt rotates in the direction of arrow F. On the other hand, when the load is increased, current vector I maintains substantially the constant phase while the size thereof changes according to the load increases (for example, a current increases according to the increase in the load). With reference to Fig. 6, current vector I increases in the direction of arrow G. In this way, the phase relation of the voltage vector and the current vector is determined in appropriate states according to the drive environment (input voltage, load torque, drive speed, and the like).

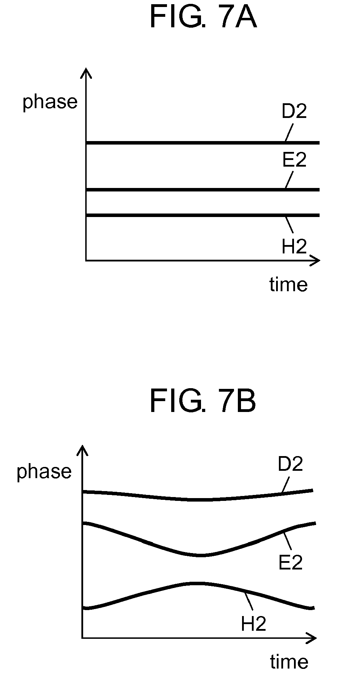

Herein, the change overtime of the phase under certain load or at certain speed when brushless DC motor 4 is driven synchronously in an open loop is described with reference drawings. Figs. 7A and 7B are graphs illustrating the phase relation of brushless DC motor 4. In particular, Figs. 7A and 7B show the relation between the phase of the phase current and the phase of the terminal voltage of brushless DC motor 4. In Figs. 7A and 7B, the abscissa shows time, and the ordinate shows a phase with respect to a phase of an induced voltage (that is, a phase difference with respect to the induced voltage). In both drawings, line D2 shows the phase of the phase current; line E2 shows the phase of the terminal voltage, and line H2 shows the phase difference between the phase current and the terminal voltage. Fig. 7A shows a drive state under low load, and Fig. 7B shows a drive state under high load. Furthermore, from the difference with respect to the phase of the induced voltage, both Figs. 7A and 7B show that the phase of the current leads with respect to the phase of the terminal voltage, so that brushless DC motor 4 is driven at extremely high speed by synchronous drive.

As shown in Fig. 7A, in synchronous drive in which load is small with respect to drive speed, rotor 4a is delayed with respect to the commutation by an angle corresponding to the load. That is to say, seen from rotor 4a, the commutation is a leading phase, and a predetermined relation is maintained. In other words, seen from the induced voltage, the phases of the terminal voltage and phase current are leading phases, and a predetermined relation is maintained. This state is the same as the magnetic flux weakening control, and thus high-speed drive is possible.

On the other hand, as shown in Fig. 7B, when load is large with respect to drive speed, rotor 4a is delayed with respect to the commutation, and thereby a magnetic flux weakening state occurs and rotor 4a is accelerated so as to be synchronous to the commutation cycle. Thereafter, with the acceleration of rotor 4a, the phase current is reduced by the decrease of the leading angle of the terminal voltage, and then rotor 4a is decelerated. This state is repeated, and rotor 4a repeats the acceleration and deceleration. This results in an unstable drive state (drive speed). That is to say, as shown in Fig. 7B, the rotation of brushless DC motor 4 changes with respect to the commutation carried out in a constant cycle. Therefore, with reference to the phase of the induced voltage, the phase of the terminal voltage changes. In such a drive state, the rotation of brushless DC motor 4 changes, and accordingly a beat sound may occur. Furthermore, a current pulsates, resulting in the possibility that an overcurrent may be determined to occur and brushless DC motor 4 may be stopped.

Therefore, when brushless DC motor 4 is driven synchronously in an open loop, brushless DC motor 4 is stably driven under low load, but the above-mentioned disadvantages occur when load is high. In other words, when brushless DC motor 4 is driven synchronously in an open loop, drive cannot be carried out at high speed / under high load, so that a driving range cannot be extended.

In motor drive device 22 of this exemplary embodiment, brushless DC motor 4 is driven in a state in which the phase of the phase current and the phase of the terminal voltage are maintained in a phase relation corresponding to the load shown in Fig. 5. A method for maintaining the phase relation between the phase of the phase current and the phase of the terminal voltage is described as follows.

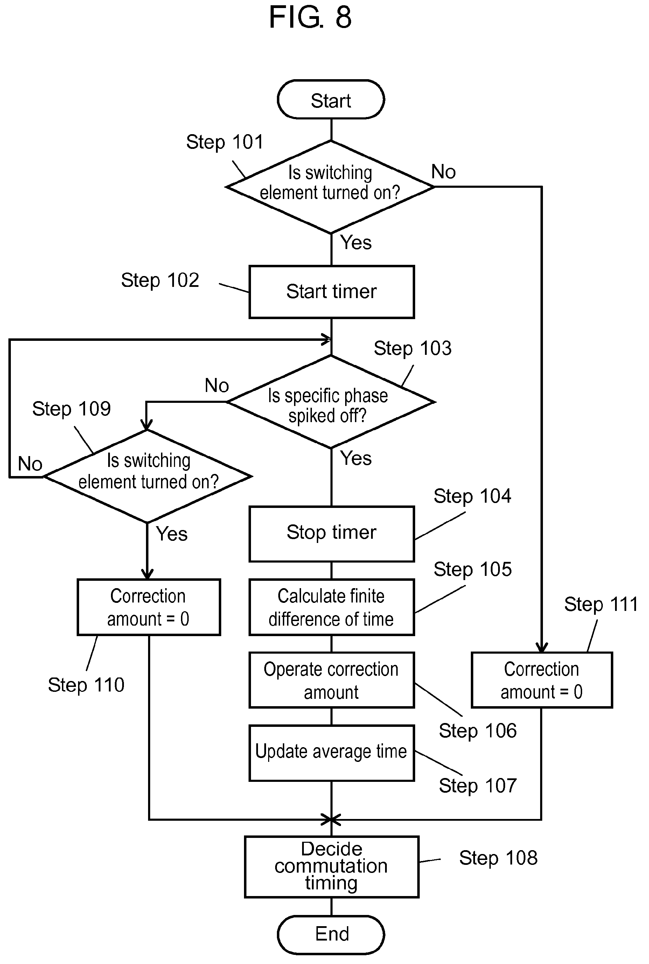

Motor drive device 22 detects a reference phase of the terminal voltage (that is, a reference commutation position of the drive signal) and a reference point of the phase of the phase current; corrects a commutation timing (a certain cycle of commutation) in synchronous drive in an open loop based on the detected reference phase and reference point; and decides a commutation timing in which the phase relation between the phase of the phase current and the phase of the terminal voltage is maintained. Specifically, second waveform generation unit 10 decides the commutation timing in which the above-mentioned phase relation is maintained. The reference phase of the terminal voltage corresponds to the position of rotor 4a detected by position detection unit 5. Therefore, a waveform generated based on the commutation timing, that is, a second waveform signal is a waveform having a predetermined relation with respect to the position of the rotor detected by the position detection unit. Second waveform generation unit 10 outputs the generated second waveform signal to drive unit 12. An operation of second waveform generation unit 10 is described with reference to a flowchart shown in Fig. 8.

Firstly, Step 101 waits for a timing at which a switching element is turned on, that is, an ON timing of a switching element. In this exemplary embodiment, Step 101 waits for the ON timing of a switching element in the upper side of U phase, that is, switching element 3a of inverter 3. When switching element 3a is turned on (Yes in Step 101), the procedure proceeds to Step 102. In Step 102, a timer for measuring time is started, and the procedure proceeds to Step 103.

In Step 103, position detection unit 5 determines whether or not a spike of a specific phase is turned off. In other words, position detection unit 5 determines whether or not a spike voltage of a specific phase decreases from the terminal voltage by a voltage reduction amount of the switching element, or from the terminal voltage to around 0 V. In this exemplary embodiment, since the specific phase is U phase, position detection unit 5 determines whether or not the terminal voltage of U phase decreases to around 0 V. In other words, a timing at which the specific phase is spiked off is a timing at which a current flowing through return current diode 3g does not flow after the switching element in the lower side of U phase, that is, switching element 3b of inverter 3 is turned off. Determination of this timing is determination of a timing at which the direction of a current changes from negative to positive, that is, a zero crossing timing of the current. When the spike voltage decreases to around 0 V, that is, the specific phase is spiked off (Yes in Step 103), the procedure proceeds to Step 104.

In Step 104, the timer started in Step 102 is stopped, a timer count value is stored, and the procedure proceeds to Step 105. That is to say, the period from a time at which switching element 3a is turned on to a time at which the spike voltage generated during a period in which a current flows through return current diode 3g is turned off is measured, and then the procedure proceeds to Step 105.

Step 105 calculates a finite difference between the time measured in Step 104 and an average of the preceding times, and the procedure proceeds to Step 106. In Step 106, based on the finite difference calculated in Step 105, a correction amount of the commutation timing is operated, and the procedure proceeds to Step 107.

Herein, correction of the commutation timing means that a commutation timing is corrected with respect to the frequency set by frequency setting unit 8, that is, with respect to a basic commutation cycle based on a command speed. Therefore, when a large correction amount is added, an overcurrent or loss of synchronization occurs. Therefore, when an arithmetic operation of the correction amount is carried out, it is carried out with a low-pass filter and the like added so as to suppress a rapid change of the commutation timing. Thus, even when a current zero cross is wrongly detected due to, for example, noise, the effect on the correction amount becomes small, and the stability of drive is further improved. Furthermore, since a rapid change is suppressed by the arithmetic operation of the correction amount, the change of the commutation timing for accelerating and decelerating brushless DC motor 4 becomes mild. Therefore, even when the command speed is largely changed and the frequency (commutation cycle) by frequency setting unit 8 is greatly changed, the change of the commutation timing becomes mild, and acceleration and deceleration become smooth.

The correction of the commutation timing specifically means that the phase difference between the phase of the phase current and the phase of the terminal voltage is always allowed to approach the average time. For example, when load is increased, and thereby the rotation speed of rotor 4a is reduced, the phase of the phase current moves in the delayed direction with reference to the phase of the terminal voltage. Therefore, the time measured in Step 104 is longer than the average time from the reference phase of the terminal voltage to the reference phase of the phase current. In this case, second waveform generation unit 10 corrects the commutation timing so as to delay the commutation timing with respect to the timing of the commutation cycle based on the rotation speed (rotation rate). That is to say, since the phase of the phase current is delayed and therefore the measurement time is increased, second waveform generation unit 10 delays the commutation timing to delay the phase of the terminal voltage. Thus, the phase difference between the phase of the terminal voltage and the phase of the phase current is allowed to approach the average time.

On the contrary, when load is reduced, and thereby the rotation speed of rotor 4a is increased, the phase of the phase current moves in the leading direction with reference to the phase of the terminal voltage. Therefore, the measured time is shorter than the average time from the reference phase of the terminal voltage to the reference phase of the phase current. In this case, second waveform generation unit 10 once corrects the commutation timing so as to advance the commutation timing with respect to the timing of the commutation cycle based on the rotation rate. That is to say, since the phase of the phase current advances and therefore the measurement time is shortened, second waveform generation unit 10 advances the commutation timing and allows the phase of the terminal voltage to be leading. Thus, the phase difference between the phase of the terminal voltage and the phase of the phase current is allowed to approach the average time.

Furthermore, second waveform generation unit 10 corrects a commutation timing in a way in which the commutation timing of a specific phase (for example, only a switching element in the upper side of U phase) is corrected in arbitrary timing (for example, once per rotation of rotor 4a), and the commutation timings of the other phases are corrected in terms of the time of the commutation cycle based on the target rotation rate. Thus, the phase relation between the phase of the phase current and the phase of the terminal voltage is kept optimum according to the load, and the drive speed of brushless DC motor 4 is maintained.

Next, in Step 107, the average time is updated by considering the time measured in Step 104, and procedure proceeds to Step 108. In Step 108, by adding the correction amount to the commutation cycle of the switching element based on the frequency (drive speed) set in frequency setting unit 8, the commutation timing is decided.

That is to say, the commutation timing is decided based on the current phase so that a phase difference between the phase of the phase current and the phase of the terminal voltage is always an average phase difference by adding a correction amount to the frequency set in frequency setting unit 8. Therefore, when load is increased, the phase difference that is a difference between the phase of the phase current and the commutation timing is narrowed. Accordingly, the average time as a reference for the correction is reduced, brushless DC motor 4 is driven with reference to the state in which the phase difference is narrowed as compared with the state before the load is increased. Thus, brushless DC motor 4 is driven at a larger leading angle, output torque is increased by the improvement of the magnetic flux weakening effect, and necessary output torque is secured.

On the contrary, when load is reduced, the phase difference that is a difference between the phase of the phase current and the commutation timing is widened. Accordingly, the average time as a reference for the correction is increased, and brushless DC motor 4 is driven based on the state in which the phase difference is widened as compared with the state before the load is reduced. Thus, brushless DC motor 4 is driven at a smaller leading angle, the output torque is reduced by the reduction of the magnetic flux weakening effect, and torque more than necessary is not output. As mentioned above, drive that secures necessary output and that does not output more than necessary output is carried out.

On the other hand, when a specific phase is not spiked off in Step 103 (No in Step 103), the procedure proceeds to Step 109. Step 109 determines whether or not a certain switching element is turned on, that is, commutation is carried out. Herein, the certain switching element is a switching element in which on/off is changed at a timing at which an interval capable of occurring a spike is terminated. In this exemplary embodiment, the certain switching element is switching element 3a in the upper side of U phase. Herein, when switching element 3a is not turned on (No in Step 109), the procedure returns to Step 103 again. Since the case in which switching element 3a is turned on (Yes in Step 109) means that a spike does not occur, the procedure proceeds to Step 110. In Step 110, a correction amount of the commutation timing is defined as 0, and the procedure proceeds to Step 108. In this case, since the correction amount is 0, in Step 108, the timing of the commutation cycle based on the rotation rate is decided as the next commutation timing.

Note here that the state in which a spike does not occur means a state in which the phase of the phase current is sufficiently leading with respect to the phase of the terminal voltage. That is to say, it is a state in which brushless DC motor 4 is stably driven because the load is small, necessary torque is sufficiently secured, and correction is not carried out.

On the other hand, in Step 101, when a certain switching element (switching element 3a in this exemplary embodiment) is not turned on (No in Step 101), the procedure proceeds to Step 111. In Step 111, the correction amount of the commutation timing is defined as 0, and the procedure returns to Step 108. In this case, since the correction amount is 0, in Step 108, a timing of the commutation cycle based on the rotation rate is decided as a next-time commutation timing.

Note here that in this exemplary embodiment, since the correction of the commutation cycle is carried out only at the ON timing of switching element 3a in the upper side of U phase, a case in which the correction is carried out once per cycle of electric angle 1 is described. However, the correction timing may be set by considering the use of motor drive device 22, inertia of brushless DC motor 4, and the like. For example, correction may be carried out once per rotation of rotor 4a, twice per cycle of electric angle 1, and every timing at which each switching element is turned on.

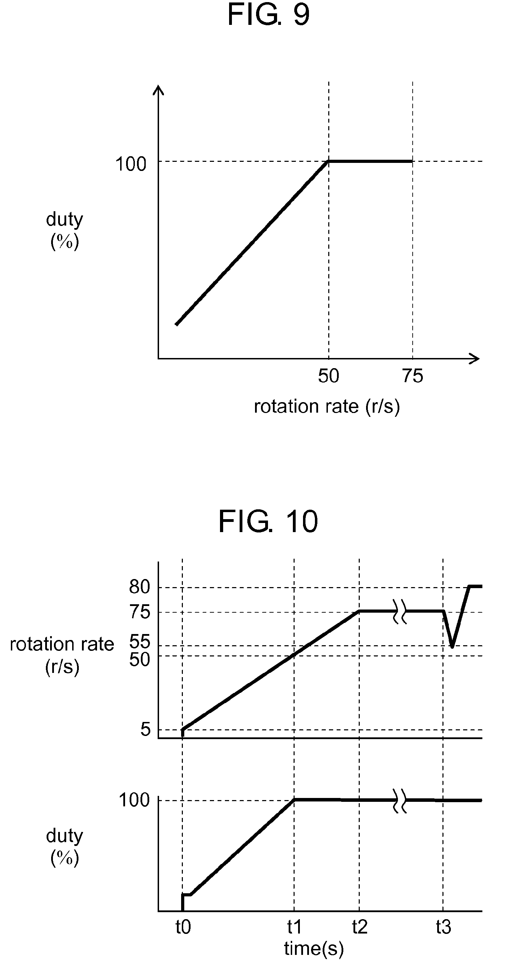

Next, a switching operation by switching determination unit 11 is described. Fig. 9 is a graph showing a relation between a rotation rate and a duty of brushless DC motor 4 in this exemplary embodiment.

In Fig. 9, when the rotation rate of brushless DC motor 4, that is, the rotation rate of rotor 4a is 50 r/s or less, brushless DC motor 4 is driven based on the first waveform signal by first waveform generation unit 6. The duty is adjusted to a value showing the highest efficiency according to the rotation rate in feedback control.

When the rotation rate is 50 r/s, the duty is 100%. In the drive based on first waveform generation unit 6, rotation cannot be carried out any more. That is to say, the rotation reaches a limit. In this state, upper limit frequency setting unit 13 sets the upper limit frequency (upper limit rotation rate) at 75 r/s, which is 1.5 times as 50 r/s. When the setting in frequency setting unit 8 is more than 75 r/s, frequency limiting unit 9 follows this upper limit frequency of 75 r/s, and does not output the frequency or higher. When the rotation rate is from 50 r/s to 75 r/s, brushless DC motor 4 is driven in a state in which the duty is constant and only a frequency (that is, a commutation cycle) is increased.

Next, an operation of upper limit frequency changing unit 14 is described. Motor drive device 22 of this exemplary embodiment is suitable for driving brushless DC motor 4 installed in compressor 17 of refrigerator 21, an air conditioner, and the like. This is because motor drive device 22 can drive brushless DC motor 4 with small torque but high efficiency in a wide driving range. For example, when the inside temperature of refrigerator 21 is stable and brushless DC motor 4 may be rotated at low speed, brushless DC motor 4 can be driven highly efficiently. On the other hand, brushless DC motor 4 can correspond to even a case in which the inside temperature is higher and drive at high speed is required. The same is true to the case of an air conditioner.

Herein, in compressor 17 of refrigerator 21, air conditioner, and the like, load is not rapidly changed, but the load may change over a long period of time. In this case, it is necessary to change the upper limit frequency. An operation of this case is described below.

Fig. 10 is a timing chart of a rotation rate and a duty of motor drive device 22 in the exemplary embodiment. In Fig. 10, at time t0, brushless DC motor 4 is started. Herein, a target rotation rate of brushless DC motor 4 is 80 r/s. Brushless DC motor 4 is driven based on the feedback control by position detection unit 5 and first waveform generation unit 6 in which the duty is raised, and accordingly the rotation rate is also increased.

At time t1, the duty reaches the maximum, that is, 100%, and the rotation rate cannot be further increased by the drive based on the feedback control by position detection unit 5 and first waveform generation unit 6. The rotation rate of brushless DC motor 4 in this case is 50 r/s. Based on this rotation rate, i.e., 50 r/s, upper limit frequency setting unit 13 sets the upper limit frequency corresponding to 75 r/s, that is, 1.5 times as 50 r/s.

At time t1, switching determination unit 11 switches the drive of brushless DC motor 4 from the dive by position detection unit 5 and first waveform generation unit 6 to the drive by frequency setting unit 8 and second waveform generation unit 10. Thereafter, by increasing the frequency of frequency setting unit 8 with the duty constant (100%), the rotation rate of brushless DC motor 4 is increased. Thus, the rotation rate is increased from time t1 to time t2. Also at time t2, the target rotation rate is 80 r/s as the original one, the upper limit frequency set in upper limit frequency setting unit 13 is a frequency corresponding to rotation rate 75r/s. Therefore, the rotation rate is limited to 75 r/s by frequency limiting unit 9.

Next, at time t3 when a predetermined time (for example, 30 min) has passed from time t2, there is a possibility that load is changed in, for example, refrigerator 21. Therefore, the maximum rotation rate is confirmed and the upper limit frequency is reset as described below.

Firstly, upper limit frequency changing unit 14 detects that a predetermined time (in this exemplary embodiment, 30 min) has passed from time t2. Next, upper limit frequency changing unit 14 indicates to switching determination unit 11 to change the drive of brushless DC motor 4 from the drive by second waveform generation unit 10 to the drive by first waveform generation unit 6. In this case, since brushless DC motor 4 is driven by first waveform generation unit 6, the rotation rate is reduced. Speed detection unit 7 detects the rotation rate at this time, and this is the maximum rotation rate that can be driven by first waveform generation unit 6.

When the load at time t3 is reduced as compared with the load at time t2, the rotation rate (maximum rotation rate) of brushless DC motor 4 at the time when the drive is switched to the drive by first waveform generation unit 6 by upper limit frequency changing unit 14 is increased as compared with the rotation rate at time t1. In this exemplary embodiment, this maximum rotation rate is confirmed to be 55 r/s, and this is increased from 50 r/s, that is, the rotation rate at time t1. Based on this maximum rotation rate, upper limit frequency setting unit 13 resets the upper limit frequency. That is to say, an upper limit frequency corresponding 82.5 r/s that is 1.5 times as 55 r/s is set.

Thereafter, similar to the drive from time t1 to time t2, switching determination unit 11 switches the drive to the drive by frequency setting unit 8 and second waveform generation unit 10, and increases the frequency of frequency setting unit 8 again, and thereby increases the rotation rate. At this time, since the rotation rate corresponding to the upper limit frequency is 82.5 r/s, brushless DC motor 4 continues to be driven at an original target rotation rate, 80 r/s. Thus, load is re-detected every predetermined time with respect to the change of the load, the upper limit frequency is reset, and thus an optimum drive corresponding to the load is carried out.

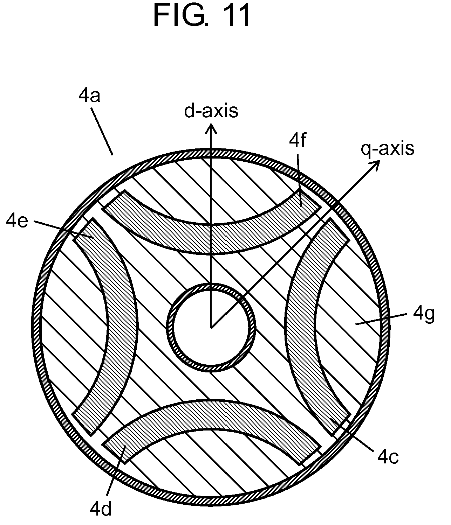

Next, a structure of brushless DC motor 4 of this exemplary embodiment is described. Fig. 11 is a sectional view showing a section perpendicular to the rotation axis of the rotor of brushless DC motor 4 in this exemplary embodiment.

Rotor 4a includes iron core 4g and four magnets 4c to 4f. Iron core 4g is formed by laminating punched silicon steel plates having a thin thickness of about 0.35 to 0.5 mm. For magnets 4c to 4f, circular arc-shaped ferrite permanent magnets are often used. As shown in Fig. 11, the magnets 4c to 4f are disposed symmetrically with respect to the center so that the circular arc-shaped concave portions face outward. On the other hand, when a permanent magnet made of rare earth such as neodymium is used for magnets 4c to 4f, magnets 4c to 4f may have a flat plate shape.

In rotor 4a having such a structure, an axis extending from the center of rotor 4a to the center of one magnet (for example, 4f) is defined as a d-axis, and an axis extending from the center of rotor 4a to a place between one magnet (for example, 4f) and the adjacent magnet (for example, 4c) is defined as q-axis. Inductance Ld in the d-axis direction and inductance Lq in the q-axis direction have inverse saliency, and they are different from each other. This means that, as a motor, in addition to torque by a magnet flux (magnet torque), torque using inverse saliency (reluctance torque) can be effectively used. Therefore, as a motor, the torque can be used more effectively. As a result, in this exemplary embodiment, highly efficient motor can be obtained.

Furthermore, in the control in this exemplary embodiment, when drive by frequency setting unit 8 and second waveform generation unit 10 is carried out, the phase current becomes a leading phase. Therefore, since the reluctance torque is largely used, the motor can be driven at higher rotation speed as compared with a motor without having inverse saliency.

Furthermore, brushless DC motor 4 of this exemplary embodiment includes rotor 4a formed by embedding permanent magnets 4c to 4f in iron core 4g, and has saliency. Furthermore, in addition to magnet torque of the permanent magnet, reluctance torque of saliency is used. Thus, not only the efficiency at low speed but also driving performance at high speed is further improved. Furthermore, when a rare earth magnet such as neodymium is employed for a permanent magnet so as to increase the rate of the magnet torque, or when the difference between inductances Ld and Lq is increased so as to increase the rate of the reluctance torque, the efficiency can be increased by changing an optimum conduction angle.

Next, a case in which compressor 17 is driven by using motor drive device 22 of this exemplary embodiment in refrigerator 21 and an air conditioner is described. In conventional motor drive devices, in order to correspond to the drive at high speed / under high load, it was necessary to use a brushless DC motor in which necessary torque is secured by reducing the number of windings of the winding. In such a brushless DC motor, noise and the like of the motor was large. When motor drive device 22 of this exemplary embodiment is used, even when brushless DC motor 4 in which torque is reduced by increasing the number of windings of the winding is used, drive at high speed / under high load can be carried out. Thus, the duty when the rotation rate is low can be increased as compared with the case in which a conventional motor drive device is used. Therefore, noise of the motor, in particular, carrier noise (corresponding to a frequency in PWM control, for example, 3 kHz) can be reduced.

Furthermore, when compressor 17 is a reciprocating compressor, since inertia is further increased and torque pulsation at high speed is small, compressor 17 can be operated stably to a range at high speed. Furthermore, when compressor 17 is installed in refrigerator 21, since the change in the load in refrigerator 21 is not so rapid, the change in the phase difference between the phase of the phase current and the phase of the terminal voltage is small. Consequently, more stable drive can be achieved.

Furthermore, with frequency limiting unit 9, since drive cannot be carried out on or beyond the drive limit, reliability in high-speed drive is secured. Thus, brushless DC motor 4 does not stop by loss of synchronization and the like. In particular, since refrigerator 21 stores foods, the inside thereof needs to be always cooled. The stop of cooling of the inside due to unexpected stop of compressor 17 can be prevented.

Furthermore, since an upper limit frequency can be reset by upper limit frequency changing unit 14, even if load is changed over time, the upper limit frequency can be reset to an appropriate maximum rotation rate. In the drive of compressor 17 in a cooling system such as refrigerator 21, an air conditioner, and the like, the load is changed very mildly. Therefore, it is not necessary to correct the maximum rotation rate frequently, and it is effective to correct the maximum rotation rate after a predetermined time has passed.

Note here that when compressor 17 of an air conditioner is driven by using motor drive device 22 of this exemplary embodiment, furthermore, it can correspond to a wide driving range from the minimum load at the time of cooling to the maximum load at the time of heating. In particular, power consumption under low load, which is rating or lower, can be reduced.

As described above, the present invention provides a motor drive device for driving a brushless DC motor including a rotor and a stator having three-phase windings. Furthermore, the present invention includes an inverter for supplying electric power to the three-phase windings; and a terminal voltage obtaining unit for obtaining a terminal voltage of the brushless DC motor. Furthermore, the present invention includes a first waveform generation unit for outputting a first waveform signal that is a waveform having a conduction angle of 120° or more and 150° or less. Furthermore, the present invention includes a frequency setting unit for setting a frequency by changing only the frequency while keeping a duty constant. Furthermore, the present invention includes a second waveform generation unit for outputting a second waveform signal that is a waveform having a predetermined relation with respect to the terminal voltage obtained by the terminal voltage obtaining unit, the frequency set by the frequency setting unit, and a conduction angle of 120° or more and less than 180°. Furthermore, the present invention includes a switching determination unit for switching output so that the first waveform signal is output when the speed of the rotor is determined to be lower than a predetermined speed, and the second waveform signal is output when the speed of the rotor is determined to be higher than the predetermined speed. Furthermore, the present invention includes a drive unit for outputting a drive signal to the inverter, indicating a supplying timing of electric power supplied to the three-phase windings based on one of the first and the second waveform signals output from the switching determination unit.

Thus, it is possible to secure torque necessary for driving a brushless DC motor at predetermined speed, and to improve the stability of the drive by synchronous drive at high speed.

Furthermore, the present invention further includes a position detection unit for detecting a position of the rotor, and the first waveform generation unit outputs the first waveform signal based on the position of the rotor output from the position detection unit. Thus, since speed feedback control is carried out while a relative position of the rotor of the brushless DC motor is detected by the position detection unit, the motor drive device can be driven at high efficiency.

Furthermore, according to the present invention, the position detection unit detects the position of the rotor by detecting a zero-crossing point of the terminal voltage obtained by the terminal voltage obtaining unit. Thus, the detection of the position of the rotor can be carried out at a low cost by, for example, detection of the zero-crossing point of the terminal voltage.

Furthermore, the present invention further includes a frequency limiting unit receiving an input of the frequency set by the frequency setting unit, and for outputting the input frequency when the frequency is equal to or below an upper limit frequency and outputting the upper limit frequency when the frequency is above the upper limit frequency. Thus, since drive on or beyond the drive limit can be prevented, reliability in drive at high speed can be secured. Thus, it is possible to prevent, for example, a refrigerator from unexpectedly stopping cooling due to loss of synchronization and the like.

Furthermore, the present invention further includes an upper limit frequency setting unit for setting the upper limit frequency based on a maximum frequency of the first waveform signal, and outputting it to the frequency limiting unit. Thus, even if load is changed over time, an appropriate maximum drive frequency according to the drive state can be set, and the high-speed drive performance according to the load can be used to its maximum.

Furthermore, the present invention further includes an upper limit frequency changing unit for resetting the upper limit frequency by temporally switching from drive by the second waveform signal to drive by the first waveform signal when a predetermined time has passed after the start of drive by the second waveform signal. Thus, even if load is changed over time, an appropriate maximum rotation rate can be reset.

Furthermore, according to the present invention, the rotor of the brushless DC motor comprises a permanent magnet in an iron core, and has saliency. Thus, in addition to magnet torque of the permanent magnet, reluctance torque of saliency can be used. Efficiency at the time of low speed can be improved and drive performance at high speed can be further improved.

Furthermore, according to the present invention, the brushless DC motor drives a compressor. Thus, by using a brushless DC motor in which torque is reduced by increasing the number of windings of the winding, noise of the motor, in particular, carrier noise can be reduced.

Furthermore, according to the present invention, the compressor is a reciprocating compressor. Thus, since the inertia is increased and torque pulsation at high speed is small, stable operation at high speed can be carried out.

Furthermore, according to the present invention, a refrigerant used in the compressor is R600a. This makes it possible to increase a cylinder volume in order to obtain refrigeration capacity, to increase inertia, and to achieve stable drive that is not easily changed due to speed and load.

Furthermore, the present invention relates to electric equipment using a motor drive device having the above-mentioned configuration. Thus, when the motor drive device is used in a refrigerator as electric equipment, since the change of load is not so rapid, more stable drive is possible. Furthermore, when the motor is used in an air conditioner as electric equipment, it can correspond to a wide driving range from the minimum load at the time of cooling to the maximum load at the time of heating. In particular, power consumption under low load that is rating or lower can be reduced.

### INDUSTRIAL APPLICABILITY

A motor drive device of the present invention improves stability of drive of a brushless DC motor at high speed / under high load, and extends a driving range. Thus, it can be applied for making compressors of not only refrigerators and air conditioners but also vending machines, showcases, heat pump water heaters efficient. Besides, it can be applied for energy-saving of electric equipment using the brushless DC motor, for example, washing machines, vacuum cleaners, and pumps.

### REFERENCE MARKS IN THE DRAWINGS

- 3: inverter
- 4: brushless DC motor
- 4a: rotor
- 4b: stator
- 4c, 4d, 4e, 4f: magnet (permanent magnet)
- 4g: iron core
- 5: position detection unit (terminal voltage obtaining unit)
- 6: first waveform generation unit
- 8: frequency setting unit
- 9: frequency limiting unit
- 10: second waveform generation unit
- 11: switching determination unit
- 12: drive unit
- 13: upper limit frequency setting unit
- 14: upper limit frequency changing unit
- 17: compressor
- 21: refrigerator (electric equipment)
- 22: motor drive device

## Claims

1. A motor drive device (22) for driving a brushless DC motor (4) comprising a rotor (4a) and a stator (4b) having three-phase windings, the motor drive device (22) comprising:
an inverter (3) for supplying electric power to the three-phase windings;
a terminal voltage obtaining unit for obtaining a terminal voltage of the brushless DC motor (4);
a first waveform generation unit (6) for outputting a first waveform signal that is a waveform having a conduction angle of 120° or more and 150° or less;
a frequency setting unit (8) for setting a frequency by changing only the frequency while keeping a duty constant;
a second waveform generation unit (10) for outputting a second waveform signal that is a waveform having a predetermined relation with respect to the terminal voltage obtained by the terminal voltage obtaining unit, the frequency set by the frequency setting unit (8), and a conduction angle of 120° or more and less than 180°;
a switching determination unit (11) for switching output so that the first waveform signal is output when a speed of the rotor (4a) is determined to be lower than a predetermined speed, and the second waveform signal is output when the speed of the rotor (4a) is determined to be higher than the predetermined speed; and
a drive unit (12) for outputting a drive signal to the inverter (3) indicating a supplying timing of electric power supplied to the three-phase windings based on one of the first and the second waveform signals output from the switching determination unit (11),
**characterized in that** the motor drive device (22) further comprises
a frequency limiting unit (9) receiving an input of the frequency set by the frequency setting unit (8), and for outputting the input frequency when the frequency is equal to or below an upper limit frequency and outputting the upper limit frequency when the frequency is above the upper limit frequency,
an upper limit frequency setting unit (13) for setting the upper limit frequency based on a maximum frequency of the first waveform signal, and outputting the upper limit frequency to the frequency limiting unit (9), and
an upper limit frequency changing unit (14) for resetting the upper limit frequency by temporally switching from drive by the second waveform signal to drive by the first waveform signal when a predetermined time has passed after the start of drive by the second waveform signal.

2. The motor drive device (22) of claim 1,
further comprising a position detection unit (5) for detecting a position of the rotor (4a),
wherein the first waveform generation unit (6) outputs the first waveform signal based on the position of the rotor output from the position detection unit (5).

3. The motor drive device (22) of claim 2,
wherein the position detection unit (5) detects the position of the rotor (4a) by detecting a zero-crossing point of the terminal voltage obtained by the terminal voltage obtaining unit.

4. The motor drive device (22) of claim 1,
wherein the rotor (4a) of the brushless DC motor (4) comprises a permanent magnet (4c, 4d, 4e, 4f) embedded in an iron core (4g), and has saliency.

5. The motor drive device (22) of claim 1,
wherein the brushless DC motor (4) drives a compressor (17).

6. The motor drive device (22) of claim 5,
wherein the compressor (17) is a reciprocating compressor.

7. The motor drive device (22) of claim 5,
wherein a refrigerant used in the compressor (17) is R600a.

8. An electric equipment comprising a brushless DC motor (4) driven by a motor drive device (22) of any one of claims 1 to 3.

## Patentansprüche

1. Motorantriebsvorrichtung (22) zum Antreiben eines bürstenlosen Gleichstrommotors (4), der einen Rotor (4a) und einen Stator (4b) mit drei Dreiphasenwicklungen umfasst, die Motorantriebsvorrichtung (22) umfassend:
einen Wechselrichter (3) zum Zuführen von elektrischer Energie zu den Dreiphasenwicklungen;
eine Klemmspannungsbezugseinheit zum Beziehen einer Anschlussspannung des bürstenlosen Gleichstrommotors (4);
eine erste Wellenformerzeugungseinheit (6) zum Ausgeben eines ersten Wellenformsignals, dessen Wellenform ein Durchlasswinkel von 120° oder mehr und 150° oder weniger hat;
eine Frequenzeinstelleinheit (8) zum Einstellen einer Frequenz, wobei nur die Frequenz geändert wird, während die Betriebsart Konstant gehalten wird;
eine zweite Wellenformerzeugungseinheit (10) zum Ausgeben eines zweiten Wellenformsignals, dessen Wellenform eine vorbestimmte Beziehung in Bezug auf die Klemmspannung der Klemmspannungsbezugseinheit, die Frequenz, die durch die Frequenzeinstelleinheit (8) gesetzt wurde, und einen Leitungswinkel von 120° oder mehr oder weniger als 180° aufweist;
eine Schaltbestimmungseinheit (11) zum Schalten des Ausgang, sodass das erste Wellenformsignal ausgegeben wird, wenn bestimmt wird, dass eine Geschwindigkeit des Rotors (4a) niedriger als eine vorbestimmte Geschwindigkeit ist, und das zweite Wellensignal ausgegeben wird, wenn bestimmt wird, dass die Geschwindigkeit des Rotors (4a) höher ist als die vorgegebene Geschwindigkeit;
eine Antriebseinheit (12) zum Ausgeben eines Antriebssignals an den Wechselrichter (3), die eine Zufuhrzeitsteuerung angibt für die elektrische Energie, die an die Dreiphasenwicklungen zugeführt wird, auf der Grundlage eines Wellenformsignals aus dem ersten und dem zweiten Wellenformsignal, die von der Schaltbestimmungseinheit (11) ausgegeben werden,
**dadurch gekennzeichnet, dass** die Motorantriebsvorrichtung (22) ferner umfasst
eine Frequenzbegrenzungseinheit (9), die eine Eingabe der durch die Frequenzeinstelleinheit (8) gesetzte Frequenz empfängt, und die Eingabefrequenz ausgibt, wenn die Frequenz gleich oder geringer als eine obere Grenzfrequenz ist und die obere Grenzfrequenz ausgibt, wenn die Frequenz über der oberen Grenzfrequenz ist,
eine Obergrenzenfrequenzeinstelleinheit (13) zum Einstellen der Obergrenzenfrequenz basierend auf einer maximalen Frequenz des ersten Wellenformensignals, und zum Ausgeben der Obergrenzenfrequenz an die Frequenzbegrenzungseinheit (9), und
eine Obergrenzenfrequenzänderungseinheit (14) zum Zurücksetzen der Obergrenzenfrequenz durch temporäres Umschalten von einem Betrieb durch das zweite Wellenformsignal zu einem Betrieb durch das erste Wellenformsignal, wenn eine vorbestimmte Zeit verstrichen ist nach dem Start des Betriebes durch das zweite Wellenformsignal.

2. Motorantriebsvorrichtung (22) nach Anspruch 1,
ferner umfassend eine Positionsbestimmungseinheit (5) zum Bestimmen einer Position des Rotors (4a),
wobei die erste Wellenformerzeugungseinheit (6) das erste Wellenformsignal ausgibt basierend auf der Position des Rotors, die von der Positionsbestimmungseinheit (5) ausgegeben wird.

3. Motorantriebsvorrichtung (22) nach Anspruch 2,
wobei die Positionsbestimmungseinheit (5) die Position des Rotors (4a) bestimmt durch Bestimmen eines Nulldurchgangspunktes der Klemmspannung die von der Klemmspannungsbezugseinheit ausgegeben wird.

4. Motorantriebsvorrichtung (22) nach Anspruch 1,
wobei der Rotor (4a) des bürstenlosen Gleichstrommotors (4) einen Permanentmagneten (4c, 4d, 4e, 4f) umfasst, der in einen Eisenkern (4g) eingebettet ist, und herausragt.

5. Motorantriebsvorrichtung (22) nach Anspruch 1,
wobei der bürstenlose Gleichstrommotor (4) einen Kompressor (17) antreibt.

6. Motorantriebsvorrichtung (22) nach Anspruch 5,
wobei der Kompressor (17) ein Kolbenprozessor ist.

7. Motorantriebsvorrichtung (22) nach Anspruch 5,
wobei ein Kältemittel, das von dem Kompressor (17) benutzt wird, R600A ist.

8. Elektrische Vorrichtung umfassend einen Bürstendosengleichstrommotor (4) angetrieben durch eine Motorantriebsvorrichtung (22) nach einem der Ansprüche 1 bis 3.

## Revendications

1. Dispositif de commande de moteur (22) pour l'entraînement d'un moteur à courant continu sans balai (4), comprenant un rotor (4a) et un stator (4b) présentant des bobinages triphasés, le dispositif de commande de moteur (22) comprenant:
un onduleur (3) pour l'alimentation en énergie électrique des bobinages triphasés;
une unité d'obtention de tension aux bornes pour l'obtention d'une tension aux bornes du moteur à courant continu sans balai (4);
une première unité de génération d'onde (6) pour la sortie d'un premier signal de forme d'onde qui est une forme d'onde présentant un angle de conduction de 120° ou plus et 150° ou moins;
une unité de réglage de fréquence (8) pour le réglage d'une fréquence en changeant seulement la fréquence tout en maintenant constante une puissance;
une deuxième unité de génération d'onde (10) pour la sortie d'un deuxième signal de forme d'onde qui est une forme d'onde présentant une relation prédéfinie par rapport à la tension aux bornes obtenue par l'unité d'obtention de tension aux bornes, la fréquence définie par l'unité de réglage de fréquence (8), et un angle de conduction de 120° ou plus et moins de 180°;
une unité de détermination de commutation (11) pour la commutation de la sortie de manière à ce que le premier signal de forme d'onde soit délivré lorsqu'une vitesse du rotor (4a) déterminée est inférieure à une vitesse prédéfinie, et le deuxième signal de forme d'onde soit délivré lorsque la vitesse du rotor (4a) déterminée est supérieure à la vitesse prédéfinie; et
une unité d'entraînement (12) pour la fourniture d'un signal de commande à l'onduleur (3) indiquant un chronométrage d'alimentation en énergie électrique fournie aux bobinages triphasés sur la base du premier ou du deuxième signal de forme d'onde délivré par l'unité de détermination de commutation (11),
**caractérisé en ce que** le dispositif de commande de moteur (22) comprend en outre
une unité de limitation de fréquence (9) recevant une entrée de la fréquence réglée par l'unité de réglage de fréquence (8), et pour la sortie de la fréquence d'entrée lorsque la fréquence est inférieure ou égale à une fréquence limite supérieure et la sortie de la fréquence limite supérieure lorsque la fréquence est supérieure à la fréquence limite supérieure,
une unité de réglage de fréquence limite supérieure (13) pour le réglage de la fréquence limite supérieure sur la base d'une fréquence maximale du premier signal de forme d'onde, et la fourniture de la fréquence limite supérieure à l'unité de limitation de fréquence (9), et
une unité de changement de fréquence limite supérieure (14) pour la redéfinition de la fréquence limite supérieure par commutation temporaire de la commande par le deuxième signal de forme d'onde à la commande par le premier signal de forme d'onde après expiration d'une durée prédéfinie après le démarrage de la commande par le deuxième signal de forme d'onde.

2. Dispositif de commande de moteur (22) selon la revendication 1,
comprenant en outre une unité de détection de position (5) pour la détection d'une position du rotor (4a),
dans lequel la première unité de génération d'onde (6) fournit le premier signal de forme d'onde sur la base de la position du rotor fournie par l'unité de détection de position (5).

3. Dispositif de commande de moteur (22) selon la revendication 2,
dans lequel l'unité de détection de position (5) détecte la position du rotor (4a) par détection d'un point de passage à zéro de la tension aux bornes obtenue par l'unité d'obtention de tension aux bornes.

4. Dispositif de commande de moteur (22) selon la revendication 1,
dans lequel le rotor (4a) du moteur à courant continu sans balai (4) comprend un aimant permanent (4c, 4d, 4e, 4f) noyé dans un noyau de fer (4g), et fait saillie.

5. Dispositif de commande de moteur (22) selon la revendication 1,
dans lequel le moteur à courant continu sans balai (4) entraîne un compresseur (17).

6. Dispositif de commande de moteur (22) selon la revendication 5,
dans lequel le compresseur (17) est un compresseur alternatif.

7. Dispositif de commande de moteur (22) selon la revendication 5,
dans lequel un réfrigérant utilisé dans le compresseur (17) est R600a.

8. Équipement électrique comprenant un moteur à courant continu sans balai (4) entraîné par un dispositif de commande de moteur (22) selon l'une quelconque des revendications 1 à 3.
